# EUROPEAN PATENT APPLICATION

(11) **EP 4 573 891 A1**
(43) Date of publication of application: **25.06.2025**
(21) Application number: 24220315.6
(22) Date of filing: 16.12.2024
(51) Int. Cl.: A01J 25/16, A01J 27/00, A23C 19/064

(54) **APPARATUS FOR THE BRINING OF CHEESE**

(30) Priority: 20.12.2023 NL 2036600
(71) Applicant: Dero Groep Joure BV, 8502 VC Joure (NL); Phisie BV, 8494PG Nes (NL)
(72) Inventor: Boute, Gerrit, 3771HT Barneveld (NL); Schippers, Philippus, 8494PG Nes (NL)
(74) Representative: Koomen, M.J.I.

(57) **Abstract**

Apparatus for the brining of cheese, whereby use is made of a brining container (1) that is not fixedly or mechanically connected to the floor of the brining space or to any component forming part of the apparatus, and whereby further use is made of holder (2) that is placeable in the brining container with at least one placing surface (3) for the cheese to be brined, more in particular use is made of a holder that is built up of one or more stackable carriers (5), each provided with a placing surface for the cheese to be brined, whereby the apparatus comprises a first transport lane (8) and a second transport lane (9), whereby the first transport lane comprises an input part (10), an output part (11) and a first cleaning part (14) located therein between, provided with a liquid discharge (12) and with sprayers (13), for the transport and cleaning of a brining container, and whereby the second transport lane comprises an input section (15), an output section (16) and a second cleaning part (18) located therein between, provided with sprayers (17), for the transport and cleaning of a carrier or a lid (6), whereby the input part of the first transport lane is provided with:

- a first parking place (19) for a brining container with brined cheese,

- a brining water discharge (20) by means of which brining water can be sucked out of the brining container involved,

- a discharge for brined cheeses, and

- a first robot (22) by means of which:

o a lid can be taken off from the brining container, and placed onto the input section for transport and cleaning thereof in the second cleaning part and further transport to the output section,

o a carrier with brined cheese can be lifted out of the brining container,

o the carrier can be placed on the discharge for the brined cheese,

o the carrier, after the cheese has been removed therefrom, can be taken up from out of the discharge and placed onto the input section for transport and cleaning thereof in the second cleaning part and further transport to the output section.

## Description

The present invention relates to a method and an apparatus for the brining of cheese.

For industrially brining cheese, in the present systems use is made of (very) large salt water basins. In these basins, which have a fixed position, so called brining cages or brining racks are stored. These are heavy stainless steel constructions which consist of one unit, but comprise several fixed layers. In between each layer cheese is stored. Depending on the desired salinity in the cheese, the cheese shall remain a certain amount of time in the brine bath.

As a result of the supply of cheese in the brine bath the pH will increase, the salinity of the brine water decrease (salt soaks into cheese and moisture is withdrawn from cheese) and the temperature of the brine water will rise as a result of the warmer cheese that is supplied in the brine bath.

To maintain constant the conditions and composition of the brine water, the brine water from the brine bath is continually refreshed and supplemented with brine, again of the right temperature and correct composition of salt and chemistry.

Because these basins are relatively large to very large, with this systematic of continually refreshing of the brine water, the correct temperature and composition are guaranteed, independent of the quantity of cheese in the brine bath.

Instead of one basin, use can also be made of several large basins with each their own cages/racks and their own supply of brine water. In this manner a strict separation can be created for several types of cheese that may not remain in the same brine bath.

### Deep brine system

The deep brine system makes use of large cages, that extend along the complete width of the brine basin. These cages have a fixed position in the brine bath with each their own tackle for lowering or lifting the cages.

Characteristic for this system is that the cheeses coming from the cheese factory are floated to a specific cage, with a fixed position in the brine basin, by means of for instance jet streams. The cheese then will float in a specific layer of the cage. This takes place by lifting the cage from the brine bath to the correct height. The assigned layer is positioned such that the cheeses can float into this layer. When the layer is full, the cage will drop down a layer and the next layer is filled. As soon as all the layers of the cage are filled and the cage is immersed completely in the brine bath, the cheese will float to a next cage and the process repeats itself with another cage.

When brining out the uppermost layer of the cage is positioned at the surface and the cheese is emptied from the layer by means of flow. Is this layer empty, then the cage is lifted such that the next layer can be emptied. This repeats itself until the cage is empty or the cheese of a specific batch is emptied.

### Rack brine system

The rack brine system characterises itself aright by smaller cages which are transported by means of a crane lane between a fixed position in the brine basin and a fixed brining in and brining out station.

The racks are filled at the brining in position by means of floating in, but often also by means of mechanically sliding over of cheeses in the rack. This rack consists, like the deep brine system, of several fixed layers in between which the cheeses are stored. For brining in, the rack is again lifted in vertical direction so that the cheese can float in in the several layers. When the whole rack is filled, the rack is transported by the crane lane to a fixed position in the brine basin. When brining out, the process takes place in reverse order.

These types of brine baths and methods have the following drawbacks:
In case the brine baths are positioned in the ground in coated concrete, there is a chance of issues in connection with groundwater as a result of leakages in the concrete. This means a chance of environmental offences and/or quality issues. Coating anew is a complex and expensive process.

In case the brine baths are made of stainless steel the quality is better, but in the long term there is still chance of leakages.

For both brine baths it holds true that the investment is high, because each brine bath is client-specific and is heavily executed in stainless steel. Apart from that, the building expenditure is high (ground work and heavy foundations as a result of the heavy constructions required for the hoisting and transportations of brine cages).

Although the brine water is continually refreshed, the basin itself can never be cleaned without pumping the complete brine bath empty. Because of a continuous cheese production this pumping empty will not be frequently carried out. Because of this a gradual increase of the content of impurities in the brine and an increase of the number of micro-organisms is very likely.

Further this type of storage system is based on 'first in - last out'. Because of this a large time difference comes about between the first and the last cheese in a cage. This means a difference in quality between the cheese, and a technological loss, because too much moisture has been withdrawn from the cheese with the longest brine duration. With rack brine systems this phenomenon arises to a lesser extent, due to the smaller rack.

The cages often are tailored to the number of cheeses from a curd maker in the cheese factory. However, there always is a fluctuation in this output of the curd maker. Also often different types of cheeses are produced in the same curd maker, which are stored in the same cages. This fluctuation in the number of cheeses or different type of cheeses causes a potentially inefficient storage.

Should a cheese factory in the future for instance be enlarged or should a new type of cheese be introduced, then the brine bath/brine cages will not be suited anymore to the cheese factory. This automatically means inefficiency. Enlarging/adapting of the brine bath is very difficult to impossible to do, because these kind of systems are not modularly constructed. A new brine bath means a high investment.

Because the surface of the brine bath is not closed, there is a chance of contamination, but also safety is an issue. Also the outside air will influence the temperature of the brine water.

A brine basin cannot be built infinitely deep. Not only because of the building construction or required hoisting installations, but it will also have a qualitative impact onto the cheese, because the water pressure onto the cheese gets higher and higher as the cheese is positioned deeper in the basin. Less depth automatically means larger surfaces required for the brine basins.

One brine bath has one type of composition of salt (and temperature). The desired salinity in the cheese can only be attained by varying the brine duration. This means that it is difficult to control the quality of the cheese and the planning of brining is very difficult because various batches, with various brining durations, can be ready at the same time.

In case several types of cheese have to be physically separated in the brine bath, for instance because of national provisions, commercial requirements or technical quality issues (herbs, biological cheese, etc), these sorts of systems have to be executed separately for each sort. This applies to the brine bath, the supply and discharge and storage of the brine water and for all utilities. In case of religious reasons it can be that also the supply and discharge chutes have to provided separately.

If there has to be brined out, but the cheese cannot be processed further, for instance if on sundays no work is done in the factory, then the cage is hoisted up so that the cheeses are no longer in the brine. During this time the cheese is in contact with the surrounding air, which is higher than the temperature of the brine water with this type of brine baths. This is bad for the quality of the cheese.

The present invention aims to obviate these drawbacks of the known method.

With the method according to the invention thereto use is made of an apparatus comprising a brining space with a brining in location, a brining out location, at least one brining container, a holder that is placeable in the brining container with at least one placement surface for the cheese that is to brined, whereby the cheese to be brined is positioned on the placement surface and the holder is placed in the brining container, characterized in that the brining container that is being used, is formed by an empty brining container that is not fixedly or mechanically connected to the floor of the brining in location or to any component forming part of the apparatus, whereby, with the placing of the holder in the brining container, the brining container is filled with brining water, after which the brining container with the cheese to be brined is put down, more in particular is transported from the brining in location to a brining storage location, to remain there during a desired brining duration.

According to a characteristic of the method according to the invention the brining container, after the brining water has been added in the brining container and the holder with the cheese to be brined has been placed therein, is closed with a lid.

According to a further characteristic of the method according to the invention the brining water that is to be supplied into the brining container has a temperature which is so much lower than the temperature of the cheese to be brined, that is coming out of the cheese factory, that at a certain ambient temperature set and maintained in the brining storage space, under, on the one hand, the expected cooling of the cheese to be brined in the brining water and, on the other hand, the expected warming of the brining water, over time the temperature in the brining water and the temperature of the cheese to be brined will approximately be the same as the ambient temperature prevailing in the brining storage space.

According to another characteristic of the method according to the invention the ambient temperature in the brining storage space is set and maintained at approximately 9 to 25°C, in particular at approximately 12 to 15°C, more in particular at approximately 13° C, and in that the brining water that is supplied into the brining container has a temperature that is so much lower than approximately 9 to 25°C, in particular approximately 12 to 15 °C, more in particular approximately 13°C , that at a temperature of the cheese to be brined, placed in the brining container, higher than approximately 9 to 25°C, in particular approximately 12 to 15 °C, more in particular approximately 13°C, under, on the one hand, the expected cooling of the cheese to be brined in the brining water and, on the other hand, the expected warming of the brining water. over time the temperature of the brining water and the temperature of the cheese to be brined and the ambient temperature in the brining storage space will be and remain at approximately 9 to 25°C, in particular at approximately 12 to 15°C, more in particular at approximately 13°C.

According to another characteristic of the method according to the invention, when determining at how much lower the temperature of the brining water that is to be supplied into the brining container has to be chosen, are taken into consideration among other the volume of the brining water, the composition of the brining water, the quantity and type of the cheese to be brined and the ambient temperature in the brining storage space.

According to another characteristic of the method according to the invention the brining container that is used has a volume of in between approximately 0,5 m3 and 3 m3, and according to a further characteristic, has a volume of approximately 1 m3.

According to yet another characteristic of the method according to the invention use is made of a holder for the cheese that is built up of one or more stackable carriers, each being provided with a placing surface for the cheese or cheeses to be brined, whereby these one after the other are placed down in the brine container.

According to a further characteristic of the method according to the invention, after going through the desired brining duration, the brining water is removed from the brining container, the carriers are lifted out of the brining container, the brined cheese is taken from the carriers and transported to a processing location for a next processing step, after which the brining container, the carriers and the lid, after having been cleaned:
either are transported to a brining in location for again use thereof,
or are assembled again and as a unit, formed by brining container, with carriers therein and closed by lid, are stored in a storage space, more in particular a cooled storage space.

According to another characteristic ol' the method according to the invention after going through the desired brining duration only the brining water is taken out from the brining container, after which the brining container, with therein the carriers with the brined cheese, and closed by the lid, is transported to the brining storage space pending the next processing step of the cheese.

With the method according to the invention the desired brining temperature can be attained without continuous supply of new brine; one starts with a low temperature brine which is adapted to the volume of brine, the composition of brine, the quantity and type of cheese and the ambient temperature in the storage. Further the storage of cheese takes place in closeable, small brine containers in which the cheese is stored and positioned in stackable modular carriers. Each brine container can be filled with cheese with its own specific type of brine and brine temperature. Further, the storage of the brine containers, with therein cheese and brine water, can take place in a brine storage space, that is formed by a conditioned, high rise build, stockroom, whereby use is made of standard logistic systems. The brine containers are transported between this conditioned storage and the brining in location and the brining out location (the brining in and brining out station).

The present invention further relates to an apparatus that is suitable for application of the method according to the invention, whereby use is made of a brining container that is not fixedly or mechanically connected to the floor of the brining in space or to any component forming part of the apparatus, and whereby further use is made of a holder that is placeable in the brining container with at least one placing surface for the cheese to be brined. more in particular use is made of a holder that is built up of one or more stackable carriers, each provided with a placing surface for the cheese to be brined, whereby the apparatus comprises a first transport lane and a second transport lane, whereby the first transport lane comprises an input part, an output part and a first cleaning part located therein between, provided with a liquid discharge and with sprayers, for the transport and cleaning of a brining container, and whereby the second transport lane comprises an input section, an output section and a second cleaning part, located therein between, provided with sprayers, for the transport and cleaning of a carrier or a lid, whereby the input part of the first transport lane is provided with:
- a first parking place for a brining container with brined cheese,
- a brining water discharge by means of which brining water can be sucked out of the brining container involved,
- a discharge for brined cheeses, and
- a first robot by means of which:
   o a lid can be removed from the brining container,
   o a carrier with brined cheese can be lifted out of the brining container,
   o the carrier can be placed in the discharge for the brined cheeses, and
   o the carrier, after the cheese has been removed therefrom, can be taken up from the discharge and placed onto the input section for transport and cleaning thereof in the second cleaning part and further transport to the output section.

According to a characteristic of the apparatus according to the invention the discharge for the brined cheeses is formed by a discharge chute filled with water or brining water with means for removing brined cheeses by means of flow or mechanically.

According to a further characteristic of the apparatus according to the invention the output part of the first transport lane is provided with:
- a second parking place for a brining container,
- a brining water supply by means of which the brining container concerned can be filled with brining water,
- a supply chute filled with water or brining water with means for supplying the cheeses to be brined by means of flow or floating,
- and a second robot by means of which:
   o a carrier can be taken up from the output section and placed in the supply chute,
   o the carrier concerned, with the cheese to be brined that has ended up thereon by means of flow or floating, can be lifted out of the supply chute,
   o the carrier concerned can be placed down into the brine container,
   ∘ a lid can be picked up from the output section and placed onto the brining container.

According to yet a further characteristic of the apparatus according to the invention the second transport lane is positioned above the first transport lane.

According to another characteristic of the apparatus according to the invention the first cleaning part is provided with means for taking hold and turning around of a brining container and with means for the discharge of a possible remainder of brine water, such as a funnel.

According to yet another characteristic of the apparatus according to the invention the first cleaning part further is provided with one or more sprayers for the rinsing of the inside of the turned around brine container with a cleaning agent and/or rinsing agent, and with a discharge for the cleaning and rinsing water.

Further characteristics and particulars of the method and apparatus according to the invention will be described hereafter with reference to the drawings of an example of an embodiment.
Figure 1 shows a side view in section of an example of an embodiment of a brine container with carriers and lid.
Figure 2 is a cutaway view of the brine container with carriers and lid according to figure 1.
Figure 3 shows a cutaway view of an example of an embodiment of the apparatus according to the invention.

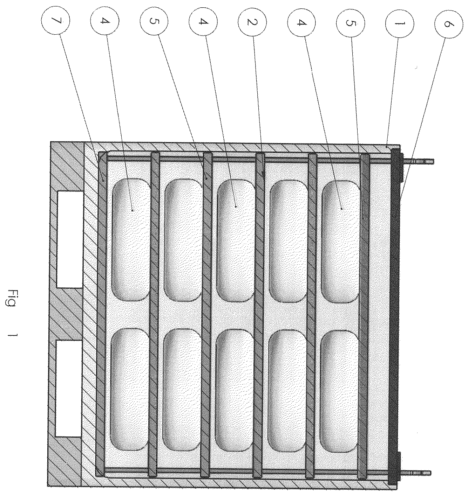

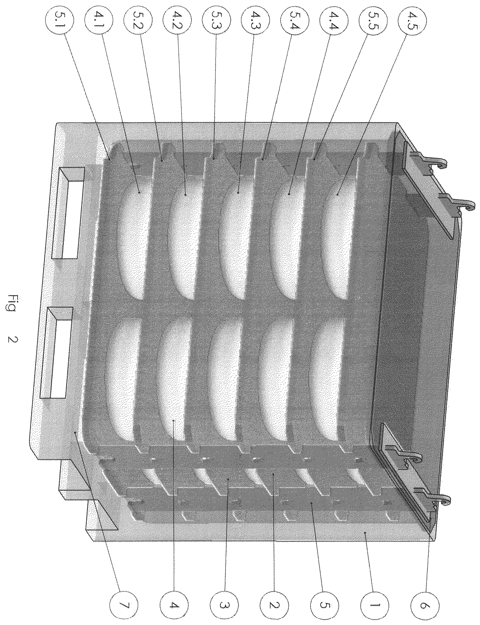

The figures 1 and 2 show the brine container 1 of which use is made with the method and apparatus according to the invention. The brine container 1 is not fixedly or mechanically connected to the floor of the work space, such as the brining in space or to any component forming part of the apparatus, such as for instance a wall, a housing or conduit or the like. The brine container 1 according to the example of an embodiment has a volume of approximately 1 m3, but this can also be a lot bigger or smaller. In the container a holder 2 can be placed. In the example of an embodiment shown the holder 2 is built up with loose stackable carriers 5, each being provided with a placing surface 3 for the cheese 4 to be brined, in the shown example of an embodiment five pieces. The brine container 1 can be closed with the lid 6.

With the method according to the invention the cheese 4 to be brined is positioned in a first group 4.1 onto the placing surface 3 of a first carrier 5.1, after which the first carrier is placed down onto the bottom 7 of the brining container 1. After that, further cheese 4 to be brined is positioned in a second group 4.2 onto the placing surface 3 of a second carrier 5.2, after which this second carrier 5.2 is placed down in the brining container 1 on top of the first carrier 5.1. After that cheese 4 to be brined is positioned in a third group 4.3 onto the placing surface 3 of a third carrier 5.3, and the third carrier 5.3 is placed down in the brining container 1 on top of the second carrier 5.2. This goes on in this way until the formation of, as in this example of an embodiment, a stack of five carriers, the one stacked above the other in the brining container 1, namely the carrier 5.1, carrier 5.2, carrier 5.3, carrier 5.4 and carrier 5.5.

After the placing down of the first carrier 5.1. onto the bottom 7 of the brining container 1 this is filled with brining water to up to above the first carrier 5.1, however in such a way, that the first group 4.1 will not get to float. When the second carrier 5.2 is placed down, the brining container 1 is filled further with brining water to up to above the second carrier 5.2, this also in such a way, that the second group 4.2 will not get to float. When the third carrier 5.3 is placed down, the brining container 1 is filled again with brining water to up to above the third carrier 5.3, this also in such a way, that the third group 4.3 will not get to float. This filling with brining water is continued in this manner during placement of a fourth carrier 5.4 and the fifth carrier 5.5.

By means of the stacking of these modular carriers 5 a small rack in an individual small brine bath is created in which the cheese is stored in the brining water.

Thereafter the brine container 1, filled with brining water, is closed with the lid 6, and placed in a conditioned surrounding, such as a brining storage space, with a desired ambient temperature that is to be maintained.

The brining water that is supplied into the brine container 1 has a temperature that is lower than the temperature of the cheese to be brined, that is coming out of the cheese factory, so much so, that at a certain ambient temperature, set and maintained in the brining storage space, under, on the one hand, the expected cooling of the cheese to be brined in the brining water and, on the other hand, the expected warming of the brining water, over time the temperature of the brining water and the temperature of the cheese to be brined will approximately be the same as the ambient temperature prevailing in the brining storage space.

Because of this systematic it is not necessary to supply new brine into the brine container and it allows for each brine container to be stored in a conditioned stockroom during the whole duration of the brining time.

The process is based on a desired balance temperature of cheese, brine water and surrounding that is attained by cooling the cheese with a quantity of cold brining water which is warmed again by the warm cheese.

Heat balance: m_{cheese}*C_{cheese}*ΔT_{cheese}= m_{brine}*C_{brine}*ΔT_{brine}, whereby ΔT=T0-T1**.**

Hereby the starting temperature of the brine (T0_{brine}) can simply be calculated because the other values are known:
- the starting temperature of the cheese from the cheese factory (T0_{cheese}),
- the desired balance temperature of the brine (T1_{brine}) and the cheese (T1_{cheese}) after time will be equal to the ambient temperature in the storage **(**T1_{cheese}=T1_{brine}=T_{surrounding}),
- the weight of the cheeses (m_{cheese}) at a certain brine volume (put V_{brine}),
- the specific gravity of cheese (C_{cheese}),
- the mass of the certain brine volume V_{brine} (m_{brine)} around the mass of the cheeses,
- the specific gravity of the brine (C_{brine}).

The storage of the brine container in the brine storage space can take place with a forklift, for instance by storing the containers in a standard rack system. The containers can also be stored in an automated logistic system that automatically brings and picks up the containers on the basis of a desired brine duration. The containers can also be provided with for instance tags for optimal traceability.

For the application of the method the apparatus according to the invention can be used.

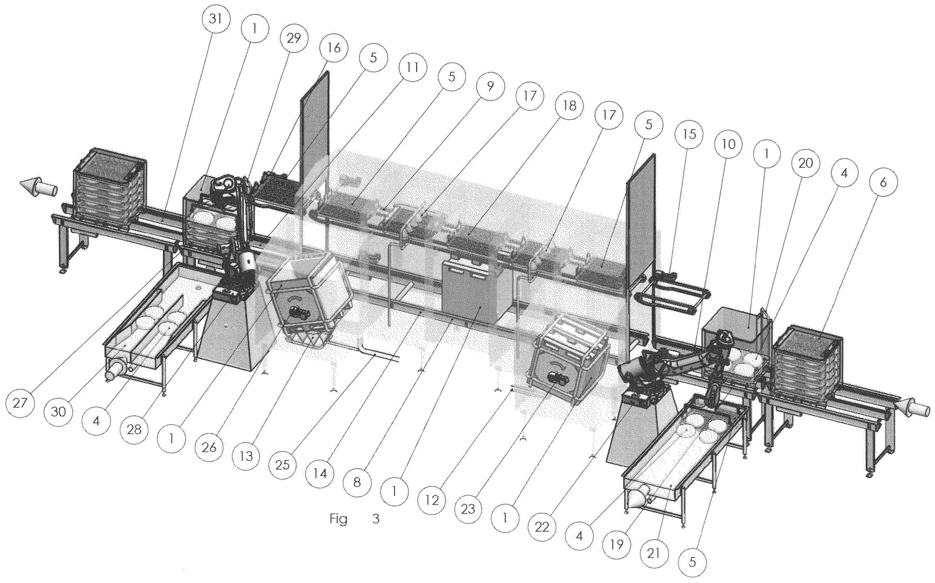

Figure 3 shows the apparatus for the brining of cheese, whereby use is made of brine containers 1 as described here before. As is shown in the drawing the apparatus comprises a first transport lane 8 and, positioned above that, a second transport lane 9.

The first transport lane 8 comprises an input part 10, an output part 11 and a first cleaning part 14 located therein between, provided with a liquid discharge 12 and with sprayers 13, for the transport and cleaning of a brining container 1. The second transport lane 9 comprises an input section 15, an output section 16 and a second cleaning part 18 located therein between, provided with sprayers 17, for the transport and cleaning of a carrier 5 or a lid 6.

The input part 10 is provided with a first parking place 19 for a brining container 1 with brined cheese 4, and which first parking place 19 constitutes a brining out location 19. Further there is a brining water discharge 20, such as a lance 20, by means of which the brining water can be sucked out of the brining container 1 involved. At the input part 10 a discharge chute 21 for the cheese is provided. Further the input part 10 is provided with a first robot 22, by means of which the lid 6 can be lifted from the brining container 1 and placed onto the input section 15 for the transport and cleaning thereof in the second cleaning part 18 and further transport to the output section 16.

By means of the robot 22, after the removal of the lid 6, the uppermost carrier 5 (numbering shown in figures 1 and 2) with brined cheese 4 is lifted out of the brining container 1 and placed in the discharge chute 21. The discharge chute 21 is filled with running water or brine water up to a level above the carrier 5, such that the cheese 4 lying on the carrier 5 gets to float and by flow, possibly with mechanical support, is removed and transported to a processing place for a following processing step.

An alternative for the discharge can be to directly pick up of the cheese 4 from the carrier 5 by yet a further robot, after which the cheese 4 along a further transport lane is transported to the next processing step.

The first robot 22 thereafter lifts the empty carrier 5 from the discharge chute 21 and places this onto the input section 15 for the transport and cleaning thereof in the second cleaning part 18. There this takes place with the sprayers 17. From there the carrier 5 is transported further to the output section 16, and there this is, cleaned, ready for again use thereof for brining in.

Thereafter the first robot 22 picks up the next carrier 5 from the brine container 1 and places this in the discharge chute 21. After the cheese 4 has floated away therefrom the first robot 22 picks up the carrier 5 and puts this onto the input section 15 for the transport and cleaning of also this carrier 5 in the second cleaning part 18 and further transport to the output section 16, where also this one there, cleaned, is ready for again use thereof for brining in.

This goes on like this until up to and including the last carrier 5 has been taken out of the brine container 1.

After that the empty brine container 1 passes from the input part 10 through the first cleaning part 14 and there is cleaned. The first cleaning part 14 is provided with means 23 there for taking hold of and turning the brine container 1 around, such that a remainder of brine water can run out from there, whereby this remainder is discharged by the liquid discharge 12, and which liquid discharge can possibly comprise a connection to a return line, provided with a filtering apparatus, to a brine tank (not shown in figure 3). The first cleaning part 14 further comprises a number of sprayers 13 for the rinsing of the inside of the turned around brine container 1 with a cleaning agent and/or rinsing agent, and a discharge 25 for the cleaning and rinsing water. The first cleaning part 14 further has means 26 for putting the brining container 1 upright again. The container 1 thereafter is transported further to the output part 11 and the second parking place 27 provided there, which form a brining in location 27 for the brine container 1, and where the brine container 1 now, empty and cleaned, is ready for again use thereof for brining in.

When the brined cheese, for instance in connection with the capacity, after the brining in cannot directly be processed further, there is a possibility, after going through the desired brining duration, to only suck by means of the lance 20 the brining water out from the brining container 1, after which the brining container 1 with the carriers 5 with the brined cheese 4 therein and closed by the lid 6 is transported to the brining storage space, pending the further processing step of the cheese.

As can be seen in figure 3 the output part 11 of the apparatus is provided with the second parking place 27, which constitutes a brining in location 27 for the brine container 1. A second robot 28 is provided, a brine water supply 29, such as a lance 29, and a supply chute 30 filled with water or brine water with means for the supply of cheeses 4 to be brined by means of flow or floating.

The second robot 28 picks up from the output section 16 a carrier 5.1, which has been cleaned in the second cleaning part 18, and places this in the supply chute 30. The supply chute 30 is filled with brine water such that the cheeses 4 by flow, possibly with mechanical help, float just over the carrier 5.1. In this way the cheese 4 by means of flow ends up in the supply chute 30 onto the placing surface 3 of the carrier 5.1 and there forms a group 4.1 of cheese to be brined. The second robot 28 then picks up the carrier 5.1 from the supply chute 30 and places this onto the bottom 7 of the brine container 1. After placing down of the first carrier 5.1 the brine container 1 is filled with brine water by the brine water supply 29 up to above this carrier 5.1, however such that the group 4.1 will not get to float.

As described here before the brine water has a predetermined composition and temperature.

The second robot 28 thereafter picks up from the output section 16 the following carrier 5.2, puts this down in the supply chute 30 and, after a second group 4.2 of cheese to be brined has formed itself onto the placement surface 3, picks this up from the supply chute 30 and places this in the brine container 1 on top of the previous, first, carrier 5.1.

After placing down of the second carrier 5.2 the brine container 1 is filled again a length with brine water up to above this carrier 5.2, however such that the second group 4.2 will not get to float. This goes on like this, as described here before with regard to the method, until the formation of, as in this example of an embodiment, a stack of five, in the brining container 1, the one stacked above the other, carriers, namely as shown in figures 1 and 2, the carrier 5.1, carrier 5.2, carrier 5.3, carrier 5.4 and carrier 5.5. After that the second robot 28 picks up a lid 6 from the supply section 16 and places this onto the brine container 1.

The brine container thereafter is removed and transported for the desired brining time via the discharge 31 to the conditioned brining storage space, this as described here before.

If there is no cheese to be brined, the cleaned carriers 5, container 1 and lid 6 are assembled anew by the second robot 28. These are then stored as a unit, preferably in a cooled storage space. Obviously in this situation it is not necessary to place the carrier 5 in the supply chute 30; the second robot directly places this carrier 5 from the output section 16 into the container 1.

The brine water returning during the brining out from the brining out location 19 and any cleaning locations is filtered with conventional techniques and is stored at a desired temperature and composition in one or more buffer tanks. Each specific type of brine has its own brine buffer tank.

In this invention use is made of a minimum of two preparation tanks, wherein minimally one tank is used to prepare the desired type of brine with the desired composition and temperature and minimally one tank is used to provide a container with brine that already is ready with the desired composition and temperature of the desired type of brine.

With the method according to the invention it is among other achieved that,
- At each time a container is brined out, the container, the carriers and the lid are cleaned. This means that the method is very hygienic and that a high quality can be reached. The chance of increasing of the number of micro-organisms hereby is substantially lowered or even prevented. This cleaning process can also take place in between times in the case empty containers with empty carriers have not been used during a certain time duration.
- Further there is a strict separation between each brine container and each type of brine water, and
- each type of cheese can be processed and stored strictly separated in separate brine containers.
- Because each brine container has its own lid, the brining is completely shielded from possible dirt that may fall in the container. Because the containers are small, the process virtually is "First In First Out". This means an optimal brine time duration for each cheese.
- An optimal brine time duration for each cheese means an optimal control of the quality and salinity of each cheese, as a result of which a better technological result is achieved. Not only in the brining process but also in the ripening process, because there will be less variation in the moisture content. This results in less chance of mold formation, but also better yield.
- Brining out without removal of the cheese is simple, because in this case only the brine is sucked out of the container and the container with carriers and cheese goes back into the storage. Hereby the cheese is then stored at the right temperature, but without the brine. In this way the brining out time at the right ambient temperature is quaranteed, even though there is no room in the follow up process because of disruptions or full schedules. Because of this the quality of the cheese remains guaranteed as a result thereof.
- The cheese may - if required - simply be processed at once without this having to be transported again through the brine bath. After all, the cheese can be lifted from above from the carrier by means of for instance a robot and directly handled or placed onto a storage box for the ripening process.
- The system of brining in and brining out can be split. After all, the small containers can also be stored at another position. This means a great latitude of design and easy fitting in in the lay-out.
- In principal it is possible to store infinitely high in standard racking. Because of this, little floor space is necessary and compact construction is allowed.
- Storing infinitely high has no influence onto the quality of the cheese. After all, each brine bath has a minimal depth. The water pressure on all cheeses is substantially equal and minimal.
- High volume consequences or mistakes in a brine bath are prevented because the system is divided up in many small brine baths.
- The floating in (and floating out) is simple and less sensitive to disruptions because the carriers are open at the upper side and thus there is less change of the cheese remaining hanging. The cheese can also simply be steered from the top. The cheese does not flow between a layer, but is free at the upper side.
- The same apparatus can be used for different types of cheeses. Because of this standardization is possible for different types of cheeses.
- Adaptation of the brine apparatus for instance by more volume or other type cheese or other type brine is simple because the apparatus is built up modularly and because different types of cheese can make use of the same apparatus.
- The chance of leakage of the closed container is minimal. With possible leakage it is simple to replace this container.
- The same systematic can be used for full automatic storage and automatic filling, cleaning and emptying of the containers, such as for instance the manual filling and/or emptying of the carriers with cheese, manual filling/emptying of the brine and possible manual transport of the container to the storage.

- 1: brine container
- 2: holder
- 3: placing surface
- 4: group
- 5: carrier
- 6: lid
- 7: bottom
- 8: first transport lane
- 9: second transport lane
- 10: input part
- 11: output part
- 12: liquid discharge
- 13: sprayers
- 14: first cleaning part
- 15: input section
- 16: output section
- 17: sprayers
- 18: second cleaning part
- 19: first parking place, brining out place
- 20: brine water discharge, lance
- 21: discharge chute
- 22: first robot
- 23: means for taking hold and turning around of a brine container
- 24: sprayers
- 25: discharge for rinsing water
- 26: means for putting a brine container right up
- 27: second parking place, brining in location
- 28: second robot
- 29: brine water discharge / lance
- 30: supply chute
- 31: discharge

## Claims

1. Apparatus for the brining of cheese, whereby use is made of a brining container that is not fixedly or mechanically connected to the floor of the brining space or to any component forming part of the apparatus, and whereby further use is made of holder that is placeable in the brining container with at least one placing surface for the cheese to be brined, more in particular use is made of a holder that is built up of one or more stackable carriers, each provided with a placing surface for the cheese to be brined, whereby the apparatus comprises a first transport lane and a second transport lane, whereby the first transport lane comprises an input part, an output part and a first cleaning part located therein between, provided with a liquid discharge and with sprayers, for the transport and cleaning of a brining container, and whereby the second transport lane comprises an input section, an output section and a second cleaning part located therein between, provided with sprayers, for the transport and cleaning of a carrier or a lid, whereby the input part of the first transport lane is provided with:
- a first parking place for a brining container with brined cheese,
- a brining water discharge by means of which brining water can be sucked out of the brining container involved,
- a discharge for brined cheeses, and
- a first robot by means of which:
o a lid can be taken off from the brining container, and placed onto the input section for transport and cleaning thereof in the second cleaning part and further transport to the output section,
o a carrier with brined cheese can be lifted out of the brining container,
o the carrier can be placed on the discharge for the brined cheese,
o the carrier, after the cheese has been removed therefrom, can be taken up from out of the discharge and placed onto the input section for transport and cleaning thereof in the second cleaning part and further transport to the output section.

2. Apparatus according to claim 1, **characterized in that** the discharge is formed by a discharge chute filled with water or brining water with means for removing brined cheeses by means of flow.

3. Apparatus according to claim 1 or 2 , **characterized in that** the output part is provided with:
- a second parking place, or several parking places, for a brining container,
- a brining water supply by means of which the brining container concerned can be filled with brining water.
- a supply chute filled with water or brining water with means for supplying the cheeses to be brined by means of flow or floating,
- and a second robot by means of which:
o a carrier can be taken up from the output section and placed in the supply chute,
o the carrier concerned, with the cheese to be brined that has ended up thereon by means of flow or floating, can be lifted out of the supply chute,
o the carrier concerned can be placed down into the brine container,
o a lid can be picked up from the output section and placed onto the brining container.

4. Apparatus according to one of the preceding claims, **characterized in that** the second transport lane is positioned above the first transport lane.

5. Apparatus according to one of the preceding claims, **characterized in that** the first cleaning part is provided with means for taking hold and turning around of a brining container and with means for the discharge of a possible remainder of brine water, such as a funnel.

6. Apparatus according to claim 5, **characterized in that** the means for the discharge of a possible remainder of brine water comprise a connection to a return line, provided with a filtering apparatus, to a brine tank.

7. Apparatus according to claim 5 or 6, **characterized in that** the first cleaning part further is provided with one or more sprayers for the rinsing of the inside of the turned around brine container with a cleaning agent and/or rinsing agent, and with a discharge for the cleaning and rinsing water.

8. Apparatus according to one of the preceding claims 2 and following, **characterized in that** means are provided by which the ambient temperature in de brining space can be set and maintained at approximately 9 to 25'C', in particular at approximately 12 to 15 °C, more in particular at approximately 13°C. and means are provided by which the temperature of the brine water to be supplied into a brine container can be set and maintained at a temperature that is so much lower than approximately 9 to 25°C, in particular approximately 12 to 15 °C, more in particular approximately 13°C, that at a temperature of the cheese to be brined, that is to be placed in the brining container, higher than approximately 9 to 25°C, in particular approximately 12 to 15°C, more in particular approximately 13°C, under, on the one hand, the expected cooling of the cheese to be brined in the brining water and, on the other hand, the expected warming of the brining water, over time the temperature of the brining water and the temperature of the cheese to be brined, and the ambient temperature in the brining storage space, will be and remain at approximately 9 to 25°C, in particular at approximately 12 to 15°C, more in particular at approximately 13°C.
